# EUROPÄISCHE PATENTANMELDUNG

(11) **EP 1 574 766 A1**
(43) Veröffentlichungstag der Anmeldung: **14.09.2005**
(21) Anmeldenummer: 04105107.9
(22) Anmeldetag: 18.10.2004
(51) Int. Cl.: F16K 5/06, F16K 31/50

(54) **Kugelventil, insbesondere für Hauswasserinstallationen**

(30) Priorität: 12.03.2004 DE 102004012622
(71) Anmelder: HANS SASSERATH & CO KG, 41352 Korschenbroich (DE)
(72) Erfinder: Hecking, Willi, 41238 Mönchengladbach (DE)
(74) Vertreter: Weisse, Renate

(57) **Zusammenfassung**

Die Erfindung betrifft ein Kugelventil mit einer verdrehbaren, eine Durchgangsbohrung (24) aufweisende Ventilkugel (22), die zwischen sphärischen Lagerflächen (30,32) in einem Durchgangskanal (16) eines Ventilgehäuses (10) gelagert und mittels einer Handhabe (62) verdrehbar ist. Ein solches Kugelventil soll so ausgebildet werden, dass der Wasserdurchfluss sich beim Öffnen und Schließen des Ventils nur langsam ändert, so dass Wasserschläge vermieden werden. Das wird dadurch erreicht, dass zwischen Handhabe (62) und Ventilkugel (22) ein Untersetzungsgetriebe vorgesehen ist.

## Beschreibung

Die Erfindung betrifft ein mit einer verdrehbaren, eine Durchgangsbohrung aufweisende Ventilkugel, die zwischen sphärischen Lagerflächen in einem Durchgangskanal eines Ventilgehäuses gelagert und mittels einer Handhabe verdrehbar ist.

Solche Kugelventile sind sehr betriebssicher. Die Lagerflächen können in dichtem Kontakt mit der Ventilkugel gehalten werden, ohne dass beim Schließen des Ventils eine Beanspruchung der Lagerflächen senkrecht zu ihrer Oberfläche und damit eine Verformung der Lagerflächen stattfindet. Die Ventilkugeln bekannter Kugelventile sind unmittelbar mit der Handhabe, z. B. einem Stellhebel, verbunden. Gegen den Einsatz von Kugelventilen in Hauswasser-Installationen, z. B. als Hauptabsperrhahn, bestehen jedoch Bedenken. Die bekannten Kugelventile können sehr schnell durch Drehen der Handhabe um 90° geöffnet oder geschlossen werden. Das birgt die Gefahr von Wasserschlägen mit sich.

Als Absperrventile in der Hauswasserinstallation sind daher Niederschraubventile vorgeschrieben. Solche Niederschraubventile haben den Vorteil, dass sie nur langsam durch Niederschrauben eines Ventiltellers auf einen Ventilsitz über eine Spindel geöffnet und geschlossen werden können. Der Wasserdurchfluss steigt daher beim Öffnen des Niederschraubventils nur langsam an und sinkt beim Schließen nur langsam ab. Dadurch können keine Wasserschläge auftreten. Nachteilig ist dabei, dass beim Schließen des Ventils eine am Ventilteller vorgesehene Dichtung senkrecht zu ihrer Oberfläche mit der Dichtkraft belastet wird. Die Dichtung wird dadurch zusammengedrückt. Das führt mit der Zeit zu einer bleibenden Verformung. Das Niederschraubventil muss mit zunehmend größerer Kraft zugedreht werden, um eine Dichtwirkung zu erzielen und den Wasserdurchfluss abzusperren. Außerdem wird der Spindelantrieb mit der Zeit schwergängig.

Der Erfindung liegt die Aufgabe zugrunde, die Vorteile der beiden vorgenannten Ventiltypen zu kombinieren und deren Nachteile zu vermeiden.

Erfindungsgemäß wird diese Aufgabe mit einem Kugelventil der eingangs genannten Art dadurch gelöst, dass zwischen Handhabe und Ventilkugel ein Untersetzungsgetriebe vorgesehen ist.

Nach der Erfindung wird somit ein Kugelventil vorgesehen. Dabei treten die geschilderten Nachteile von Niederschraubventilen nicht auf. Durch die Verwendung eines Untersetzungsgetriebes zwischen Handhabe und Ventilkugel wird aber sichergestellt, dass das Kugelventil nicht schlagartig geöffnet und geschlossen werden kann und keine Wasserschläge auftreten.

Eine kompakte und vorteilhafte Konstruktion des Untersetzungsgetriebes wird dadurch erhalten, dass
(a) das Untersetzungsgetriebe eine in einem Gehäuseteil geradgeführte Mutter aufweist, die durch die Handhabe über eine Gewindespindel längs einer zu der Achse der Durchgangsbohrung der Ventilkugel senkrechte Achse verstellbar ist, und
(b) die Mutter mit der Ventilkugel über ein mit Steilgewindemitteln versehenes, zu der Gewindehülse gleichachsiges Übertragungsglied gekuppelt ist, wobei in die Steilgewindemittel Mitnahmemittel eingreifen, welche auf der Innenseite der Mutter angebracht sind.

Die Mutter wird über die Gewindespindel langsam linear in Längsrichtung verstellt. Das Verhältnis der Stellwege von Handhabe und Mutter wird dabei durch die Gewindesteigung der Gewindespindel bestimmt. Die axiale Bewegung der Mutter wird über die Steilgewindemittel in eine Drehbewegung der Ventilkugel umgesetzt. Dadurch ergibt sich eine weitere Untersetzung.

Bei einer bevorzugten Konstruktion weisen die Steilgewindemittel eine Mehrzahl von gegeneinander Winkelversetzten, wendelförmigen Leisten auf, die zwischen sich wendelförmige Führungskanäle bilden. An der Mutter sind winkelversetzte Mitnahmeglieder vorgesehen sind, welche in die Führungskanäle eingreifen. Vorteilhafterweise sind die Mitnahmeglieder Kugeln, die zwischen schalenförmigen Ausnehmungen der Mutter und dem Grund der Führungskanäle gehalten sind.

Das Übertragungsglied sitzt zentral auf einem scheibenförmigen Abschlussglied, das abdichtend und drehbar in einer Öffnung des Ventilgehäuses fluchtend mit der Ventilkugel angeordnet ist. Die Ventilkugel ist über einen in eine Ausnehmung der Ventilkugel eingreifenden Mitnehmer mit dem Abschlussglied gekuppelt. Der Durchmesser der Öffnung im Ventilgehäuse ist größer als der Durchmesser der Ventilkugel. Die Ventilkugel ist zwischen zwei ringförmigen Lagerkörpern gehalten, welche in dem Ventilgehäuse um den Durchgangskanal herum gehalten sind die sphärischen Lagerflächen bilden. Die sphärischen Lagerflächen weisen auf ihrer der Öffnung des Ventilgehäuses zugewandten Seite Ausschnitte auf, die ein Herausnehmen der Ventilkugel gestatten.

Ein Ausführungsbeispiel der Erfindung ist nachstehend unter Bezugnahme auf die zugehörigen Zeichnungen näher erläutert.
- Fig.1: zeigt einen Längsschnitt eines Kugelventils mit einem Untersetzungsgetriebe zwischen Handhabe und Ventilkugel in der Schließstellung.
- Fig.2: zeigt das Kugelventil von Fig.1 in der Offenstellung.
- Fig.3: zeigt einen Schnitt längs der Linie B - B von Fig.1
- Fig.4: zeigt einen Schnitt längs der Linie C - C von Fig.1.

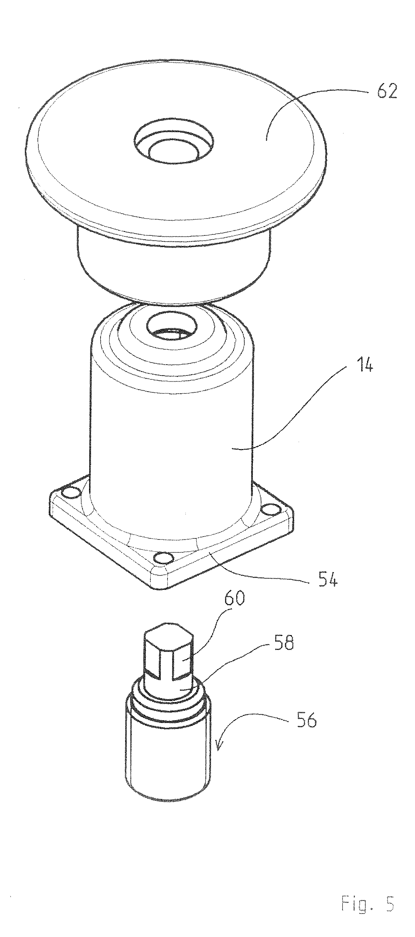

- Fig. 5: ist eine auseinandergezogen-perspektivische Darstellung des oberen Teils des Ventilgehäuses mit der Handhabe in Gestalt eines Drehgriffs und der Ventilspindel.

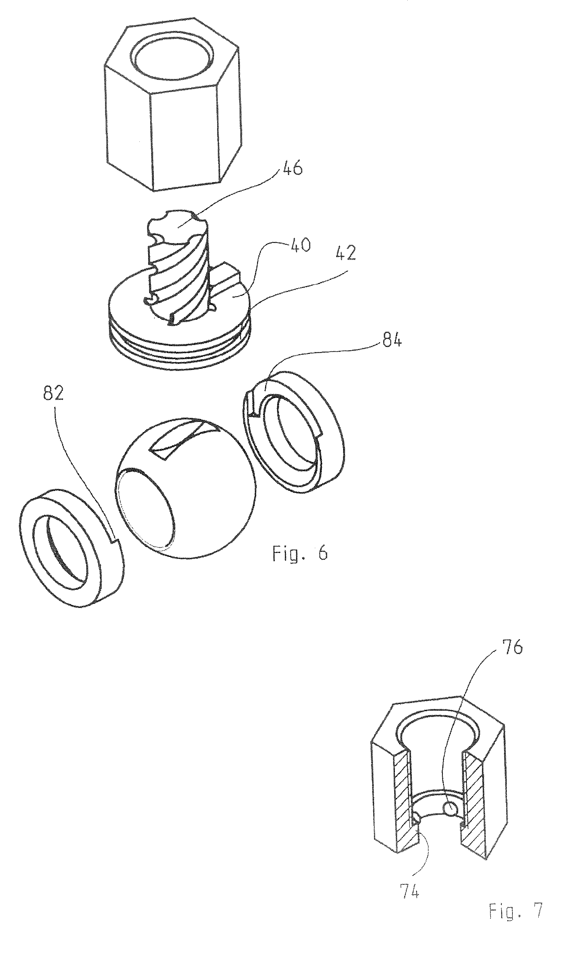

- Fig.6: ist eine auseinandergezogen-perspektivische Darstellung der Mutter, der Steilgewindemittel mit dem Abschlussglied, der Ventilkugel und der Lagerflächen mit den sphärischen Lagerflächen.
- Fig.7: ist eine aufgeschnitten-perspektivische Darstellung der Mutter und der Mitnahmeglieder.
- Fig.8: ist eine perspektivische Darstellung des Unterteils.

Mit 10 ist generell ein Ventilgehäuse bezeichnet. Das Ventilgehäuse 10 besteht aus einem Unterteil 12 und einem Oberteil 14.

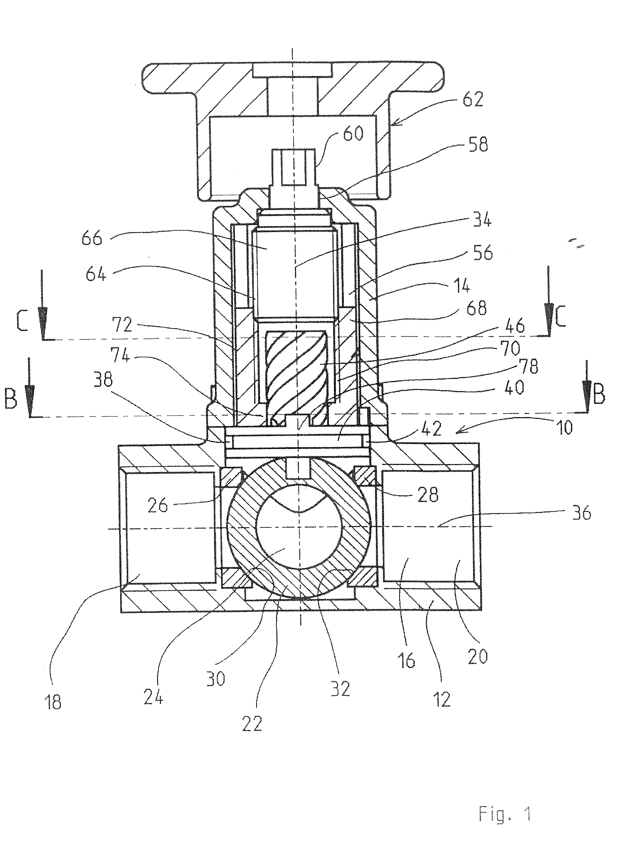

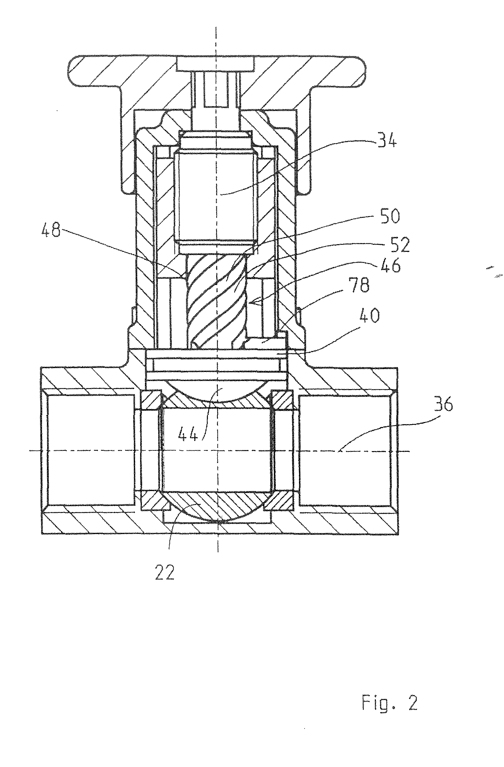

Das Unterteil 12 weist einen geraden Durchgangskanal 16 auf, der einen Einlass 18 und einen damit fluchtenden Auslass 20 verbindet. In dem Durchgangskanal 16 sitzt eine Ventilkugel 22. Die Ventilkugel 22 weist eine Durchgangsbohrung 24 auf. Die Ventilkugel ist zwischen zwei ringförmigen Lagerkörpern 26, 28 mit sphärischen Lagerflächen 30 bzw. 32 gehalten. Die Ventilkugel 22 ist um eine Achse 34 drehbar, die senkrecht zu der Achse 36 des Durchgangskanals 16 verläuft. In der Offenstellung (Fig.2) fällt die Achse der Durchgangsbohrung 24 der Ventilkugel 22 mit der Achse 36 des Durchgangskanals 16 zusammen. In der Schließstellung (Fig.1) liegt die Achse der Durchgangsbohrung 24 senkrecht zu den Achsen 34 und 36.

Das Unterteil 12 weist eine zu der Achse 34 zentrierte Öffnung 38 auf. Die Öffnung 38 ist durch ein scheibenförmiges Abschlussglied 40 verschlossen. Das Abschlussglied 40 ist in der Öffnung 38 drehbar. Das Abschlussglied 40 weist eine Umfangsnut 42 in seiner Mantelfläche mit einer Dichtung auf. An dem Abschlussglied 40 ist ein Mitnehmer 44 in Form einer kreisabschnittsförmigen Leiste vorgesehen, der in einen entsprechenden Schlitz der Ventilkugel eingreift. Dadurch wird die Ventilkugel 22 mit dem Abschlussglied 40 um, die Achse 34 verdreht.

Auf dem Abschlussglied 40 sitzen Steilgewindemittel 46. Die Steilgewindemittel 46 weisen ein Übertragungsglied 48 in Form eines einen zylindrischen Zapfens auf, Auf der Mantelfläche des Übertragungsgliedes 46 sind eine Mehrzahl von winkelversetzten wendelförmigen Leisten 50 mit großer Gewindesteigung vorgesehen. Zwischen benachbarten Leisten 50 sind entsprechend wendelförmige Führungskanäle 52 gebildet.

Das Oberteil 14 des Gehäuses 10 ist umgekehrt-topfförmig mit zylindrischer Grundform. Am offenen Ende weist das Oberteil 14 einen quadratischen Flansch 54 auf, der mittels Schrauben 56 mit dem Unterteil 12 verschraubt ist. In dem "boden" des topfförmigen Oberteils 14 ist eine Gewindespindel 56 mittels einer zylindrischen Lagerfläche 58 drehbar gelagert. Die Achsen des Oberteils 14 und der Gewindespindel 56 fallen mit der Achse 34 zusammen. Aus dem Oberteil 14 ragt ein an der Gewindespindel vorgesehener Vierkant 60 heraus. Auf diesem Vierkant 60sitzt eine Handhabe 62 in Form eines Drehgriffs. Durch die Handhabe 62 kann die Gewindespindel 56 verdreht werden.

Die Gewindespindel 56 weist einen zylindrischen, mit Außengewinde 64 versehenen Abschnitt 66 auf. Auf diesem Abschnitt 66 ist eine Mutter 68 mit einem Innengewinde 70 geführt. Die Mutter 68 ist eine Sechskantmutter, die mit ihren Ecken in Längsnuten 72, die in der Innenwand des Oberteils 14 gebildet sind, unverdrehbar aber längsbeweglich geführt ist. Die Mutter 68 weist an dem der Ventilkugel 22 zugewandten Ende einen nach innen vorstehenden Rand 74 auf, welcher die wendelförmigen Leisten 50 der Steilgewindemittel 46 umschließt. Wie am besten aus Fig.7 ersichtlich ist, sind in der Innenwandung des Randes 74 kalottenförmige Vertiefungen 76 angebracht. In diesen kalottenförmigen Vertiefungen 76 sitzen Kugeln, die in die zugehörigen wendelförmigen Führungskanäle 52 des Übertragungsgliedes 46 eingreifen. Die Gewindespindel 56, die Mutter 68 und das Übertragungsglied 46 bilden ein Untersetzungsgetriebe. Eine Drehung der Handhabe 62 um einen bestimmten Winkel bewirkt eine Verdrehung der Ventilkugel um einen wesentlich kleineren Winkel.

Das Untersetzungsgetriebe arbeitet wie folgt:

Bei einer Drehung der Handhabe 62 wird die Gewindespindel 56 verdreht. Damit wird die unverdrehbar geradgefährte Mutter 68 mit einer durch die Steigung des Gewindes 64 bestimmten Geschwindigkeit abwärts bewegt. Durch die Kugeln, die zwischen den Vertiefungen 76 und dem Grund der Führungskanäle 52 gehalten sind, wird bei dieser Abwärtsbewegung über das von den Leisten 50 gebildete Steilgewinde das Übertragungsglied 46 und damit das Abschlussglied 40 verdreht. Durch den Mitnehmer 44 wird die Ventilkugel entsprechend mitgenommen.

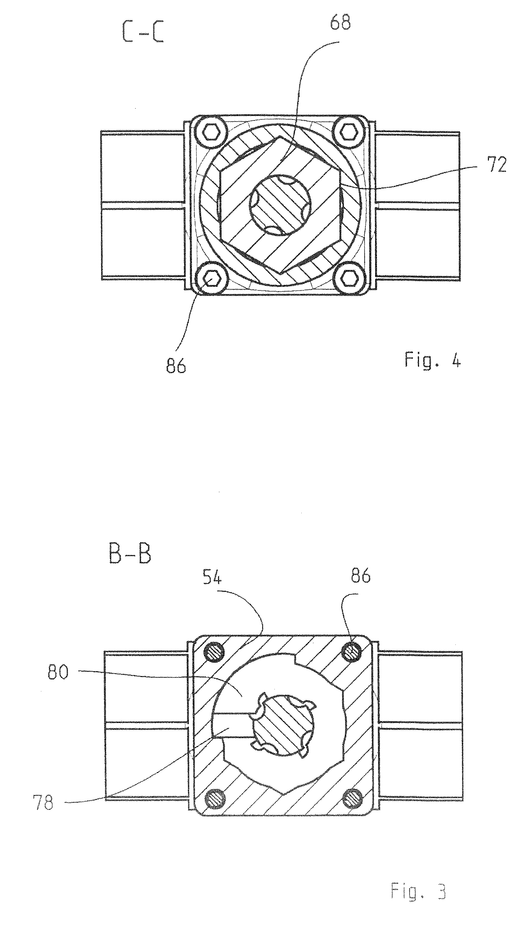

An dem Abschlussglied 40 ist ein Anschlag 78 vorgesehen, der in einer sich über 90° erstreckenden, bogenförmigen Ausnehmung 80 (Fig.3) des Oberteils zwischen der Offenstellung und der Schließstellung beweglich ist.

Nach Abschrauben des Oberteils 14 kann das Abschlussglied 40 herausgenommen werden. Der Durchmesser der Öffnung 38 ist größer als der Durchmesser der Ventilkugel 22. Die sphärischen Lagerflächen 30, 32 der ringförmigen Lagerkörper 26 und 28 weisen auf ihrer der Öffnung 38 des Ventilgehäuses 10 zugewandten Seite Ausschnitte 82. bzw. 84 auf, die in der Offenstellung der Ventilkugel 22 ein Herausnehmen der Ventilkugel 22 gestatten. Das ist am besten aus Fig.2 ersichtlich. Auf diese Weise lässt sich die Ventilkugel 22 zum Warten oder Austauschen herausnehmen.

## Patentansprüche

1. Kugelventil, insbesondere für Hauswasser-Installation, mit einer verdrehbaren, eine Durchgangsbohrung aufweisende Ventilkugel, die zwischen sphärischen Lagerflächen in einem Durchgangskanal eines Ventilgehäuses gelagert und mittels einer Handhabe verdrehbar ist, **dadurch gekennzeichnet, dass** zwischen Handhabe und Ventilkugel ein Untersetzungsgetriebe vorgesehen ist.

2. Kugelventil nach Anspruch 1, **dadurch gekennzeichnet, dass**
(a) das Untersetzungsgetriebe eine in einem Gehäuseteil geradgefährte Mutter aufweist, die durch die Handhabe über eine Gewindespindel längs einer zu der Achse der Durchgangsbohrung der Ventilkugel senkrechte Achse verstellbar ist, und
(b) die Mutter mit der Ventilkugel über ein mit Steilgewindemitteln versehenes, zu der Gewindehülse gleichachsiges Übertragungsglied gekuppelt ist, wobei in die Steilgewindemittel Mitnahmemittel eingreifen, welche auf der Innenseite der Mutter angebracht sind.

3. Kugelventil nach Anspruch 2, **dadurch gekennzeichnet, dass**
(a) die Steilgewindemittel eine Mehrzahl von gegeneinander winkelversetzten, wendelförmigen Leisten aufweisen, die zwischen sich wendelförmige Führungskanäle bilden, und
(b) an der Mutter winkelversetzte Mitnahmeglieder vorgesehen sind, welche in die Führungskanäle eingreifen.

4. Kugelventil nach Anspruch 3, **dadurch gekennzeichnet, dass** die Mitnahmeglieder Kugeln sind, die zwischen schalenförmigen Ausnehmungen der Mutter und dem Grund der Führungskanäle gehalten sind.

5. Kugelventil nach einem der Ansprüche 2 bis 4, **dadurch gekennzeichnet, dass**
(a) das Übertragungsglied zentral auf einem scheibenförmigen Abschlussglied sitzt, das abdichtend und drehbar in einer Öffnung des Ventilgehäuses fluchtend mit der Ventilkugel angeordnet ist und
(b) die Ventilkugel über einen in eine Ausnehmung der Ventilkugel eingreifenden Mitnehmer mit dem Abschlussglied gekuppelt ist.

6. Kugelventil nach Anspruch 5, **dadurch gekennzeichnet, dass** der Durchmesser der Öffnung im Ventilgehäuse größer ist als der Durchmesser der Ventilkugel.

7. Kugelventil nach Anspruch 6, **dadurch gekennzeichnet, dass**
(a) die Ventilkugel zwischen zwei ringförmigen Lagerkörpern gehalten ist, welche in dem Ventilgehäuse um den Durchgangskanal herum gehalten sind die sphärischen Lagerflächen bilden, und
(b) die sphärischen Lagerflächen auf ihrer der Öffnung des Ventilgehäuses zugewandten Seite Ausschnitte aufweisen, die ein Herausnehmen der Ventilkugel gestatten.
